Europäisches Patentamt

European Patent Office

Office européen des brevets

(11) Veröffentlichungsnummer: **0 429 930 A2**

## EUROPÄISCHE PATENTANMELDUNG

(21) Anmeldenummer: **90121551.7**

(22) Anmeldetag: **10.11.90**

(51) Int. Cl.⁵: **H01M 10/42**

(30) Priorität: **17.11.89 DE 3938262**

(43) Veröffentlichungstag der Anmeldung:
**05.06.91 Patentblatt 91/23**

(84) Benannte Vertragsstaaten:
**CH DE ES FR GB IT LI NL Patentblatt**

(71) Anmelder: **Asea Brown Boveri
Aktiengesellschaft
Kallstadter Strasse 1
W-6800 Mannheim 31(DE)**

(72) Erfinder: **Birnbreier, Hermann, Dr.
Am Friedhof 15
W-6902 Sandhausen(DE)**
Erfinder: **Mennicke, Stefan, Dr.
Türkisweg 27
W-6906 Gauangelloch(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) Schutzeinrichtung für Hochtemperaturbatterien.

(57) Bei Hochtemperaturbatterien, welche eine Reihenschaltung von galvanischen Zellen mit einem Festelektrolyten enthalten, kann es unbemerkt zu einer Schädigung des Festelektrolyten kommen, wenn die Batterie im kalten Zustand kurzgeschlossen wird und an einzelnen Zellen eine Spannungsumkehrung eintritt. Mit der Erfindung wird eine Schutzeinrichtung vorgeschlagen, welche aus Mitteln (2, 20, 21) besteht, welche den Zellen (1) parallelgeschaltet sind und die bei Betriebstemperatur der Batterie hochohmig bzw. im kalten Zustand niederohmig sind. Diese Mittel (2, 20, 21) bilden im Falle eines an äußeren Anschlüssen (3, 4) einer kalten Batterie verursachten Kurzschlusses einen Spannungsteiler, der für eine gewünschte Spannungsaufteilung sorgt.

Fig.1

EP 0 429 930 A2

## SCHUTZEINRICHTUNG FÜR HOCHTEMPERATURBATTERIEN

Die Erfindung bezieht sich auf eine Schutzeinrichtung zur Verhinderung einer Spannungsumkehr an galvanischen Zellen einer Hochtemperaturbatterie.

Hochtemperaturbatterien, die auch als Hochenergie-Batterien bezeichnet werden, arbeiten bei einer Temperatur, die deutlich über der Umgebungstemperatur liegt. Ein typischer Vertreter solcher Hochtemperaturbatterien ist die Natrium-Schwefel-Batterie, welche bei etwa 300°C betriebsmäßig arbeitet. Eine solche Batterie enthält mehrere in Serie geschaltete Einzelzellen oder in Serie geschaltete Gruppen von parallelgeschalteten Zellen, um eine gewünschte Batteriespannung zu erreichen. Die der Erfindung zugrundeliegende Problemstellung wird nachstehend anhand der Natrium-Schwefel-Batterie erläutert.

Die galvanischen Zellen der Natrium-Schwefel-Batterie enthalten einen keramischen Festelektrolyten und Reaktanden, welche bei Betriebstemperatur flüssig sind. Der innere elektrische Widerstand der Zellen ist stark von der Temperatur abhängig. Dies ist auf die Temperaturabhängigkeit des Festelektrolyten züruckzuführen und auf die Tatsache, daß mit Sinken der Temperatur die Viskosität der flüssigen Reaktanden zunimmt, wodurch der Massentransport behindert wird. Bei Absinken der Temperatur unter den Erstarrungspunkt der Reaktanden steigt der Innenwiderstand stark an.

Kühlt man diese Zellen auf Umgebungstemperatur, so beträgt der Innenwiderstand einer Zelle mehrere Ohm bis mehrere Kiloohm, evtl. sogar einige MOhm. Die bisherigen Erfahrungen haben gezeigt, daß z.B. bei Natrium-Schwefel-Zellen gleicher Größe und Ausführung keine reproduzierbaren gleich großen Innenwiderstände entstehen. In einer Reihenschaltung von mehreren Zellen sind also bei gleich großer Leerlaufspannung je Zelle unterschiedliche Innenwiderstände wirksam. Wird eine solche Reihenschaltung an den beiden äußeren Polen der Batterie kurzgeschlossen, so fallen an den einzelnen Zellen unterschiedliche Spannungen ab, je nach dem Betrag ihrer Innenwiderstände. Bei einem starken Streuen dieser Innenwiderstände kann es dann zu einer Spannungsumkehr an einer oder mehreren Zellen kommen.

Festelektrolyte, die beispielsweise aus Beta-Aluminiumoxid bestehen, können bei Spannungsumkehr Schädigungen erhalten. Diese Schädigungen können während oder nach einem Wiederaufheizen der Zellen auf Betriebstemperatur zum Bruch des Festelektrolyten führen.

Ein Kurzschluß an einer kalten Batterie kann zufällig oder durch Unvorsicht erzeugt werden, ohne daß dies bemerkt wird. Im Gegensatz zu Batterien, die bei Umgebungstemperaturen arbeiten und die durch einen Lichtbogen oder ihre Erwärmung bzw. Zerstörung der Batterie auf einen Kurzschluß aufmerksam machen, zeigen kalte Hochtemperaturbatterien bei Kurzschluß keine nach außen hin sichtbare Wirkung.

Auch durch eine Überprüfung der Hochtemperaturbatterie vor dem Wiederaufheizen kann ein durch vorherigen Kurzschluß an einzelnen Zellen eingetretener Defekt praktisch nicht detektiert wird.

Der Erfindung liegt daher die Aufgabe zugrunde, eine Schutzeinrichtung für Hochtemperaturbatterien anzugeben, welche verhindert, daß durch einen Kurzschluß an einer kalten Batterie eine Schädigung von Zellen als Folge einer Spannungsumkehr eintritt.

Diese Aufgabe wird durch eine im Anspruch 1 angegebene Schutzeinrichtung für Hochtemperaturbatterien gelöst, wobei die Batterie eine Reihenschaltung von Einzel-Zellen oder von parallelgeschalteten Gruppen von Zellen aufweist, denen Mittel parallelgeschaltet sind, welche bei Betriebstemperatur der Batterie einen hohen elektrischen Widerstand haben und unterhalb einer festgelegten unteren Grenztemperatur der Batterie einen im Vergleich zum elektrischen Innenwiderstand der Zellen niedrigen elektrischen Widerstand aufweisen, so daß diese Mittel einen Spannungsteiler bilden, der bei einem über die äußeren Anschlüsse der Batterie geschlossenen Stromkreis die Spannungsaufteilung an den Zellen bestimmt.

Vorteilhafte Ausgestaltungen sind in Unteransprüchen angegeben.

Als Mittel zur Parallelschaltung zu den Zellen sind insbesondere temperaturgesteuerte Schalter oder temperaturabhängige Widerstände geeignet.

Die vorgeschlagene Schutzeinrichtung hat den Vorteil, daß sie selbsttätig bei Unterschreiten einer festgelegten unteren Batterietemperatur wirksam wird, d.h. ausreichend niederohmig wird, um eine gewünschte Spannungsaufteilung zu erzwingen, falls über die äußeren Anschlüsse der Batterie ein Stromkreis geschlossen wird. Außerdem wird die Einrichtung im Bereich der Betriebstemperatur der Hochtemperaturbatterie selbsttätig ausreichend hochohmig, so daß eine Selbstentladung der Batterie vermieden wird.

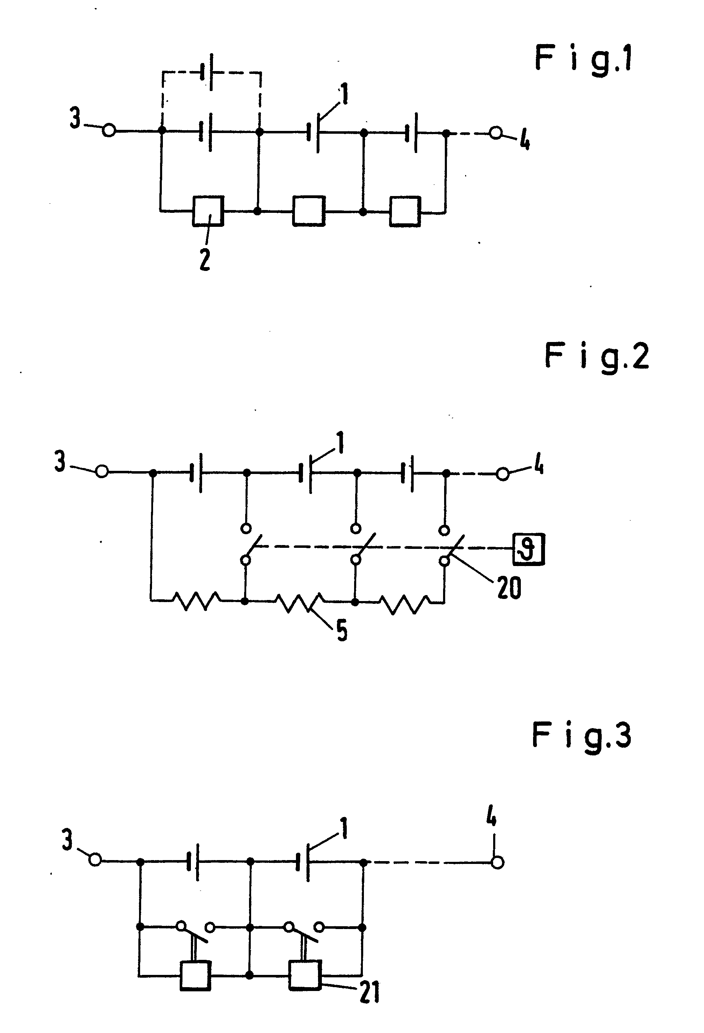

In der Zeichnung sind in den Figuren 1 bis 3 Ausführungsbeispiele für erfindungsgemäße Schutzeinrichtungen skizziert.

Fig. 1 zeigt eine Serienschaltung von galvanischen Zellen 1. Durch gestrichelte Linien ist angedeutet, daß anstelle von Einzel-Zellen auch parallelgeschaltete Gruppen von Zellen 1 vorhanden sein können. Auch für die in den übrigen Figuren dargestellten Ausführungsmöglichkeiten gilt, daß anstelle von Einzel-Zellen auch Gruppen von parallelgeschalteten Zellen vorhanden sein können. Jeder Zelle 1 (oder Zellengruppe) ist ein Mittel 2 parallelgeschaltet, welches im Betriebstemperaturbereich der Batterie hochohmig ist und nach Unterschreiten eines festgelegten unteren Temperaturwertes sehr niederohmig wird, jedenfalls deutlich niederohmiger als jede der vorhandenen Zellen. Wenn über äußere Anschlüsse 3, 4 der Batterie, nämlich die Batteriepole, ein Stromkreis, beispielsweise durch Kurzschluß. geschlossen wird, wirken die Mittel 2 als Spannungsteiler und bestimmen die Spannungsaufteilung an den Zellen 1. Wenn alle Mittel 2 den gleichen Widerstand aufweisen, wird eine gleichmäßige Spannungsaufteilung erreicht. Als Mittel 2 sind beispielsweise PCT-Widerstände oder Elemente aus Aluminiumchlorid geeignet.

Figur 2 zeigt eine Ausführungsvariante, bei welcher temperaturgesteuerte Schalter 20 niederohmige Widerstände 5 jeweils den Zellen 1 parallel schalten. Der Widerstandswert der Widerstände 5 kann auch zu Null gewählt werden, so daß die Zellen 1 kurzgeschlossen werden, wenn der jeweilige Zellentyp einen solchen Kurzschluß im kalten Zustand zuläßt.

Figur 3 zeigt eine Ausführungsvariante, bei welcher Schalter 21 angeordnet sind, welche eine Spannungsumkehr über eine Zelle 1 detektieren und einen Kontakt schließen, der die Zelle 1 überbrückt.

Dafür geeignete Schaltelemente sind elektrochemische Elemente mit einer reversiblen und einer blockierenden Elektrode und einem Festelektrolyten. Derartige Elemente wurden von Wheat (J. Can. Ceram. Soc. (1978), 47, 13) als Timer oder Coulombmeter beschrieben. Da die Zellen bereits gegen sehr kleine negative Spannungen empfindlich sind, darf kein Schalter verwendet Werden, der erst jenseits einer Schleusenspannung leitend wird. Das von Wheat beschriebene Element kann den Anforderungen genügen, wenn man den Vorrat an beweglichem Material groß genug wählt, so daß er während des Kurzschlusses nicht vollständig zur blockierenden Elektrode transportiert wird.

**Ansprüche**

1. Schutzeinrichtung zur Verhinderung einer Spannungsumkehr an galvanischen Zellen einer Hochtemperaturbatterie, welche eine Reihenschaltung von Einzelzellen oder von parallelgeschalteten Gruppen von Zellen enthält, dadurch gekennzeichnet, daß den Zellen oder Zellengruppen (1) Mittel (2) parallelgeschaltet sind, welche bei Betriebstemperatur der Batterie einen hohen elektrischen Widerstand haben und unterhalb einer festgelegten unteren Grenztemperatur der Batterie einen im Vergleich zum elektrischen Innenwiderstand der Zellen (1) niedrigen elektrischen Widerstand aufweisen, so daß diese Mittel (2) einen Spannungsteiler bilden, der bei einem über die äußeren Anschlüsse (3, 4) der Batterie geschlossenen Stromkreis die Spannungsaufteilung an den Zellen bestimmt.

2. Schutzeinrichtung nach Anspruch 1, dadurch gekennzeichnet, daß die parallel zu den Zellen oder Zellengruppen (1) geschalteten Mittel (2) unterhalb der unteren Grenztemperatur alle einen zumindest ungefähr gleichen niedrigen Widerstand aufweisen.

3. Schutzeinrichtung nach Anspruch 1 oder 2, dadurch gekennzeichnet, daß die parallelgeschalteten Mittel (2) die Zellen (1) kurzschließen.

4. Schutzeinrichtung nach einem der Ansprüche 1 bis 3, dadurch gekennzeichnet, daß die parallelgeschalteten Mittel (2) Schalter (20) sind, welche temperaturgesteuert betätigt werden.

5. Schutzeinrichtung nach einem der Ansprüche 1 bis 3, dadurch gekennzeichnet, daß die parallelgeschalteten Mittel (2) PCT-Widerstände sind.

6. Schutzeinrichtung nach einem der Ansprüche 1 bis 3, dadurch gekennzeichnet, daß die parallelgeschalteten Mittel (2) Elemente sind, die z.B. aus Aluminiumchlorid hergestellt sind, welche aufgrund ihrer Eigenschaften bei hohen Temperaturen elektrisch isolieren und bei niedrigen Temperaturen elektrisch leitend sind.

7. Schutzeinrichtung nach einem der Ansprüche 1 bis 4, dadurch gekennzeichnet, daß als parallelgeschaltete Mittel (2) Schalter (21) verwendet sind, welche aufgrund einer ermittelten Spannungsumkehr und bereits bei einer sehr geringen Schleusenspannung schalten.

Fig.1

Fig.2

Fig.3